# EUROPEAN PATENT APPLICATION

(11) **EP 4 787 773 A1**
(43) Date of publication of application: **05.08.2026**
(21) Application number: 24887899.3
(22) Date of filing: 04.11.2024
(51) Int. Cl.: H04L 9/40

(54) **PACKET FORWARDING AND PROCESSING METHOD, APPARATUS, DEVICE, SYSTEM, AND STORAGE MEDIUM**

(30) Priority: 08.11.2023 CN 202311490786
(71) Applicant: HUAWEI TECHNOLOGIES CO., LTD., Shenzhen 518129 (CN)
(72) Inventor: LIU, Xiaoyong, Shenzhen, Guangdong 518129 (CN); LIU, Xiaobin, Shenzhen, Guangdong 518129 (CN); YAO, Xiong, Shenzhen, Guangdong 518129 (CN)
(74) Representative: Goddar, Heinz J.
(86) International application number: PCT/CN2024/129674
(87) International publication number: WO 2025/098287

(57) **Abstract**

This application discloses a packet forwarding and processing method, an apparatus, a device, a system, and a storage medium, relating to the field of communication technologies. A main ONU receives a first packet sent by a sub ONU; when traffic is directly transmitted between the sub ONU and a firewall device, sends a second packet to the firewall device, where the second packet is obtained by adding a port tag and a first tunnel header to the first packet, the port tag indicates a port of the sub ONU, and the first tunnel header indicates the firewall device to send the second packet to the main ONU; receives the second packet on which audit processing or filtering processing has been performed by the firewall device, obtains the first packet and the port tag based on the second packet, and obtains, based on the port tag, a first processing policy configured for the port of the sub ONU; and processes and forwards the first packet according to the first processing policy. In the method, the first packet that is sent by the sub ONU and that is forwarded by the firewall device can be processed according to the first processing policy configured for the port of the sub ONU.

## Description

This application claims priority to Chinese Patent Application No. 202311490786.5, filed on November 8, 2023 and entitled "PACKET FORWARDING AND PROCESSING METHOD, APPARATUS, DEVICE, SYSTEM, AND STORAGE MEDIUM", which is incorporated herein by reference in its entirety.

### TECHNICAL FIELD

This application relates to the field of communication technologies, and in particular, to a packet forwarding and processing method, an apparatus, a device, a system, and a storage medium.

### BACKGROUND

With the development of communication technologies, fiber to the room (fiber to the room, FTTR) has been widely applied to home or enterprise access networks. FTTR networking includes a main optical network unit (optical network unit, ONU), sub ONUs, and an optical network. The main ONU is located between an optical line terminal (optical line terminal, OLT) and the sub ONU, upstream connected to the OLT through a passive optical network (passive optical network, PON) interface to support gigabit home access, and downstream provides a PON interface to connect to the sub ONU. The sub ONUs are distributed to rooms, upstream connected to the main ONU through optical cables or photoelectric composite cables, and downstream connected to various home Internet access terminals, implementing on-demand access of the Internet access terminals in the rooms. Therefore, FTTR may also be referred to as on-demand fiber connection.

To improve the security of the FTTR networking, an independent firewall device needs to be deployed. The firewall device can create a protection barrier between the FTTR networking and external networks, to block insecure network factors. Therefore, in scenarios in which the firewall device is deployed for the FTTR networking, how to forward and process received packets is an urgent problem to be resolved.

### SUMMARY

This application provides a packet forwarding and processing method, an apparatus, a device, a system, and a storage medium, to forward and process a received packet in a scenario in which a firewall device is deployed for FTTR networking.

According to a first aspect, a packet forwarding and processing method is provided. An example in which a main ONU performs the method is used. The main ONU receives a first packet sent by a sub ONU; when traffic is directly transmitted between the sub ONU and a firewall device, sends a second packet to the firewall device, where the second packet is obtained by adding a port tag and a first tunnel header to the first packet, the port tag indicates a port of the sub ONU, and the first tunnel header indicates the firewall device to send the second packet to the main ONU; receives the second packet on which audit processing or filtering processing has been performed by the firewall device, obtains the first packet and the port tag based on the second packet, and obtains, based on the port tag, a first processing policy configured for the port of the sub ONU, where the first processing policy includes at least one of a service binding policy, a wide area network (wide area network, WAN) binding policy, a local area network (local area network, LAN) binding policy, a port filtering policy, a priority policy, or a sending interface policy; and processes and forwards the first packet according to the first processing policy.

In the method, the received first packet sent by the sub ONU can be processed by the firewall device and then forwarded, that is, the firewall device is connected to the main ONU in off-path mode, thereby improving the security of the first packet forwarded by the main ONU. In addition, the second packet is obtained by encapsulating the port tag and the first tunnel header into the first packet, so that the firewall device can perform routing and forwarding on the second packet based on the first tunnel header. After the firewall device forwards the second packet to the main ONU, the main ONU can obtain the port tag encapsulated at an inner layer and the first packet based on the second packet, and determine, based on the port tag, that the first packet is originally sent through the port of the sub ONU, that is, information about the original port of the first packet is not lost, so that the main ONU can still process, according to the first processing policy configured for the port of the sub ONU, the received first packet sent by the firewall device. In other words, a manner in which the main ONU processes, after the firewall device is connected to the main ONU in off-path mode, the first packet sent by the sub ONU is the same as a manner in which the main ONU processes, before the firewall device is connected to the main ONU in off-path mode, the first packet sent by the sub ONU. Packet processing performance is not affected by the firewall device connected in off-path mode, thereby improving accuracy of packet forwarding and processing.

In a possible implementation, the first packet carries information indicating the port of the sub ONU. After the main ONU receives the first packet sent by the sub ONU, when traffic is not directly transmitted between the sub ONU and the firewall device, the main ONU obtains, based on the information about the port of the sub ONU, the first processing policy configured for the port of the sub ONU, and processes the first packet according to the first processing policy, to obtain a processed third packet; when a next hop of the third packet indicates an OLT, and traffic is directly transmitted between the OLT and the firewall device, sends the third packet to the firewall device; and receives the third packet on which audit processing or filtering processing has been performed by the firewall device, and sends the third packet to the OLT.

The third packet sent by the main ONU is processed by the firewall device before being sent to the OLT, and then forwarded, thereby improving the security of the third packet sent to the OLT.

In a possible implementation, the main ONU further receives a fourth packet sent by the OLT; when traffic is directly transmitted between the OLT and the firewall device, sends the fourth packet to the firewall device; and receives the fourth packet on which audit processing or filtering processing has been performed by the firewall device, and forwards the fourth packet in a manner of receiving the fourth packet sent by the OLT.

Therefore, the received fourth packet sent by the OLT can be processed by the firewall device and then forwarded, thereby improving the security of the fourth packet forwarded by the main ONU. In addition, after the fourth packet enters the main ONU again from the firewall device, the main ONU can simulate the received fourth packet sent by the firewall device as the received fourth packet sent by the OLT, and still perform processing based on the received fourth packet sent by the OLT. In other words, a manner in which the main ONU processes, after the firewall device is connected to the main ONU in off-path mode, the fourth packet sent by the OLT is the same as a manner in which the main ONU processes, before the firewall device is connected to the main ONU in off-path mode, the fourth packet sent by the OLT. Accuracy of packet forwarding and processing is not affected by the firewall device connected in off-path mode, thereby improving the accuracy of packet forwarding and processing.

In a possible implementation, after the main ONU receives the fourth packet sent by the OLT, when traffic is not directly transmitted between the OLT and the firewall device, the main ONU determines, based on a destination address of the fourth packet, that a destination port of the fourth packet is the port of the sub ONU; when a next hop of the fourth packet indicates the sub ONU and traffic is directly transmitted between the sub ONU and the firewall device, sends a fifth packet to the firewall device, where the fifth packet is obtained by adding the port tag and a second tunnel header to the fourth packet, and the second tunnel header indicates the firewall device to send the fifth packet to the main ONU; and receives the fifth packet on which audit processing or filtering processing has been performed by the firewall device, obtains the fourth packet and the port tag based on the fifth packet, and sends the fourth packet to the sub ONU based on the port that is of the sub ONU and that is indicated by the port tag.

The fourth packet sent by the main ONU is processed by the firewall device before being sent to the sub ONU, and then forwarded, thereby improving the security of the fourth packet sent to the sub ONU. In addition, the fifth packet is obtained by encapsulating the port tag and the second tunnel header into the fourth packet, so that the firewall device can perform routing and forwarding on the fifth packet based on the second tunnel header. After the firewall device forwards the fifth packet to the main ONU, the main ONU can obtain the port tag encapsulated at an inner layer and the fourth packet based on the fifth packet, and determine, based on the port tag, that the fourth packet is sent to the port of the sub ONU, thereby improving accuracy of packet forwarding and processing after the firewall device is connected in off-path mode.

In a possible implementation, after obtaining the first packet and the port tag based on the second packet, the main ONU may further store a correspondence between source address information of the first packet and the port that is of the sub ONU and that is indicated by the port tag, where the source address information may include media access control (media access control, MAC) information and address resolution protocol (address resolution protocol, ARP) information. In this case, a manner of determining, based on the destination address of the fourth packet, that the destination port of the fourth packet is the port of the sub ONU may be: determining, from the correspondence based on the destination address of the fourth packet indicating the MAC information and the ARP information, that the destination port of the fourth packet is the port of the sub ONU.

After the main ONU receives the first packet sent by the sub ONU, because traffic is directly transmitted between the sub ONU and the firewall device, the main ONU first does not learn the source address information of the first packet. After the main ONU receives the second packet sent by the firewall device based on the first tunnel header, because the first packet and the port tag are obtained based on the second packet, the main ONU learns the source address information of the first packet to the port that is of the sub ONU and that is indicated by the port tag, that is, stores the correspondence between the source address information of the first packet and the port that is of the sub ONU and that is indicated by the port tag. In this way, although the main ONU receives the first packet twice, the source address information of the first packet is learned only to the port that is of the sub ONU and that is indicated by the port tag, the source address information of the first packet is not learned twice and is not incorrectly learned to a port corresponding to a second LAN interface, thereby improving accuracy of obtaining the correspondence based on the first packet, and further improving accuracy of determining the port based on the correspondence.

According to a second aspect, a packet forwarding and processing apparatus is provided. The apparatus is used in a main ONU, and the apparatus includes:
a transceiver module, configured to perform a receiving and/or sending-related operation in the first aspect or any possible implementation of the first aspect; and
a processing module, configured to perform an operation other than the receiving and/or sending-related operation in the first aspect or any possible implementation of the first aspect.

In a possible implementation, the transceiver module includes a receiving module and/or a sending module. The receiving module is configured to perform the receiving-related operation, and the sending module is configured to perform the sending-related operation.

In a possible implementation, the transceiver module is configured to: receive a first packet sent by a sub ONU; when traffic is directly transmitted between the sub ONU and a firewall device, send a second packet to the firewall device, where the second packet is obtained by adding a port tag and a first tunnel header to the first packet, the port tag indicates a port of the sub ONU, and the first tunnel header indicates the firewall device to send the second packet to the main ONU; and receive the second packet on which audit processing or filtering processing has been performed by the firewall device. The processing module is configured to: obtain the first packet and the port tag based on the second packet, obtain, based on the port tag, a first processing policy configured for the port of the sub ONU, where the first processing policy includes at least one of a service binding policy, a WAN binding policy, a VLAN binding policy, a port filtering policy, a priority policy, or a sending interface policy; and process and forward the first packet according to the first processing policy.

In a possible implementation, the first packet carries information indicating the port of the sub ONU. The processing module is further configured to: when traffic is not directly transmitted between the sub ONU and the firewall device, obtain, based on the information about the port of the sub ONU, the first processing policy configured for the port of the sub ONU, and process the first packet according to the first processing policy, to obtain a processed third packet. The transceiver module is further configured to: when a next hop of the third packet indicates an OLT, and traffic is directly transmitted between the OLT and the firewall device, send the third packet to the firewall device; and receive the third packet on which audit processing or filtering processing has been performed by the firewall device, and send the third packet to the OLT.

In a possible implementation, the transceiver module is further configured to: receive a fourth packet sent by the OLT; when traffic is directly transmitted between the OLT and the firewall device, send the fourth packet to the firewall device; and receive the fourth packet on which audit processing or filtering processing has been performed by the firewall device, and forward the fourth packet in a manner of receiving the fourth packet sent by the OLT.

In a possible implementation, the processing module is further configured to: when traffic is not directly transmitted between the OLT and the firewall device, determine, based on a destination address of the fourth packet, that a destination port of the fourth packet is the port of the sub ONU. The transceiver module is further configured to: when a next hop of the fourth packet indicates the sub ONU and traffic is directly transmitted between the sub ONU and the firewall device, send a fifth packet to the firewall device, where the fifth packet is obtained by adding the port tag and a second tunnel header to the fourth packet, and the second tunnel header indicates the firewall device to send the fifth packet to the main ONU; and receive the fifth packet on which audit processing or filtering processing has been performed by the firewall device, obtain the fourth packet and the port tag based on the fifth packet, and send the fourth packet to the sub ONU based on the port that is of the sub ONU and that is indicated by the port tag.

In a possible implementation, the processing module is further configured to: store a correspondence between source address information of the first packet and the port that is of the sub ONU and that is indicated by the port tag, where the source address information includes MAC information and ARP information; and determine, from the correspondence based on the destination address of the fourth packet indicating the MAC information and the ARP information, that the destination port of the fourth packet is the port of the sub ONU.

According to a third aspect, a network device is provided. The network device includes a processor, the processor is coupled to a memory, the memory stores at least one program instruction or code, and the at least one program instruction or the code is loaded and executed by the processor, to cause the network device to implement the packet forwarding and processing method according to the first aspect and any possible implementation of the first aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into a same chip, or may be respectively disposed on different chips. A type of the memory and a manner of disposing the memory and the processor are not limited in this application.

According to a fourth aspect, a packet forwarding and processing system is provided. The packet forwarding and processing system includes a main ONU, a sub ONU, and a firewall device. The sub ONU is configured to send a first packet to the main ONU; the main ONU is configured to perform the method according to the first aspect or any possible implementation of the first aspect; the firewall device is configured to receive a second packet sent by the main ONU, where the second packet is obtained by encapsulating a port tag and a first tunnel header into the first packet; and the firewall device is further configured to send, to the main ONU, the second packet on which audit processing or filtering processing has been performed by the firewall device.

According to a fifth aspect, a computer-readable storage medium is provided. The storage medium stores at least one instruction, and the instruction is loaded and executed by a processor, to cause a computer to implement the method according to the first aspect or any possible implementation of the first aspect.

According to a sixth aspect, a computer program (product) is provided. The computer program (product) includes computer program code, and when the computer program code is run by a computer, the computer is caused to perform the method in the foregoing aspects.

According to a seventh aspect, a chip is provided, and includes a processor. The processor is configured to invoke, from a memory, instructions stored in the memory and run the instructions, to cause a communication device on which the chip is installed to perform the method in the foregoing aspects.

According to an eighth aspect, another chip is provided, and includes an input interface, an output interface, a processor, and a memory. The input interface, the output interface, the processor, and the memory are connected to each other through an internal connection path. The processor is configured to execute code in the memory, and when the code is executed, the processor is configured to perform the method in the foregoing aspects.

It should be understood that, for beneficial effects achieved by the technical solutions in the second aspect to the eighth aspect and the corresponding possible implementations in this application, refer to the foregoing technical effects in the first aspect and the corresponding possible implementations. Details are not described herein again. In addition, the packet forwarding and processing apparatus mentioned in the second aspect may be the chip mentioned in the seventh aspect or the eighth aspect, or the packet forwarding and processing apparatus may be the device mentioned in the third aspect.

### BRIEF DESCRIPTION OF DRAWINGS

FIG. 1 is a diagram of connection of FTTR networking according to an embodiment of this application;
FIG. 2 is a diagram of connecting a firewall device to FTTR networking according to an embodiment of this application;
FIG. 3 is a diagram of connecting a firewall device to FTTR networking in off-path mode according to an embodiment of this application;
FIG. 4 is a diagram of an implementation environment of a packet forwarding and processing method according to an embodiment of this application;
FIG. 5 is a flowchart of a packet forwarding and processing method according to an embodiment of this application;
FIG. 6 is a diagram of connecting a firewall device to FTTR networking in off-path mode according to an embodiment of this application;
FIG. 7 is a flowchart of a packet forwarding and processing method according to an embodiment of this application;
FIG. 8 is another diagram of connecting a firewall device to FTTR networking in off-path mode according to an embodiment of this application;
FIG. 9 is a flowchart of another packet forwarding and processing method according to an embodiment of this application;
FIG. 10 is a diagram of a networking architecture of FTTR networking according to an embodiment of this application;
FIG. 11 is a diagram of a structure of a packet forwarding and processing apparatus according to an embodiment of this application;
FIG. 12 is a diagram of a structure of a network device according to an embodiment of this application; and
FIG. 13 is a diagram of a structure of another network device according to an embodiment of this application.

### DESCRIPTION OF EMBODIMENTS

To make the objectives, technical solutions, and advantages of this application clearer, the following further describes implementations of this application in detail with reference to the accompanying drawings.

With the development of communication technologies, access through a fiber has been implemented for most users accessing a network, and the continuous improvement of access through a fiber and network infrastructure provides a solid information foundation for the prosperity of Internet services. Internet service applications, such as ultra-high-definition videos, cloud virtual reality (virtual reality, VR), cloud gaming, online education, and remote office, are emerging, posing increasingly high requirements on network bandwidth, latency, jitter, and the like. Therefore, the bandwidth can be increased to provide better Internet access experience for the users.

In a scenario in which the bandwidth is continuously increased, because an access rate of an access device used by a user to access a network is insufficient, or a radio signal in a room is weak due to wall penetration or the like, an Internet access rate that can be finally perceived by the user is limited. Alternatively, because a network cable is split or the network cable is unqualified, a bearer capability of the network cable is low, where the network cable splitting means that the network cable is split into two for data transmission. Alternatively, because an access device is connected to an optical transmission network (optical transmission network, OTN) through a 100 Mbps Ethernet interface, a negotiated rate for the user to access the network is restricted. Therefore, FTTR networking is proposed, to ensure stable high-bandwidth coverage of the entire room and implement on-demand connection.

In the FTTR networking, a main ONU is a core, the main ONU is connected to an OLT upstream, and downstream connected to a plurality of sub ONUs through an optical splitter or an optical socket, and each sub ONU is downstream connected to at least one user terminal downstream. The sub ONU supports a gigabit Ethernet interface and a dual-band wireless signal, and each sub ONU enters each room with an optical fiber, to provide wired or wireless gigabit network coverage for the room. Optionally, an ONU may also be referred to as an optical network terminal (optical network terminal, ONT). The user terminal may include terminals such as a computer, a camera, and a voice phone.

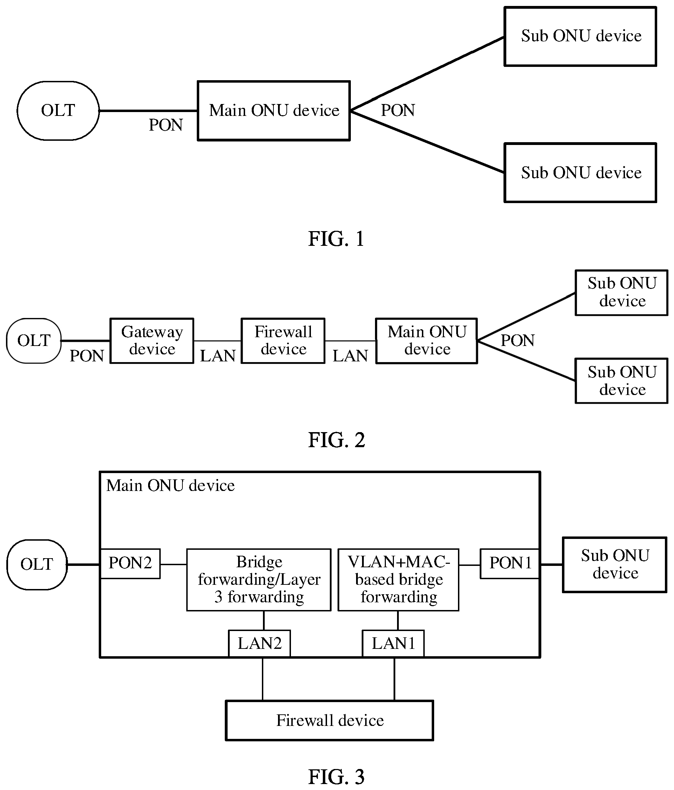

For example, FIG. 1 is a diagram of connection of FTTR networking according to an embodiment of this application. A main ONU is located between an OLT and a sub ONU, is upstream connected to the OLT through a PON interface, supports gigabit home access, and downstream provides a PON interface to connect to the sub ONU. The PON interface may be a 10-gigabit-capable passive optical network (10-gigabit-capable passive optical network, XGPON) interface or a 10 Gbit/s Ethernet passive optical network (10 Gbit/s Ethernet passive optical network, 10G-EPON) interface. A plurality of sub ONUs are distributed to different rooms. The sub ONUs are upstream connected to the main ONU through optical cables or photoelectric composite cables, and downstream provide wireless interfaces and gigabit Ethernet (gigabit Ethernet, GE) interfaces to access various home Internet access terminals, to implement on-demand access of the Internet access terminals. The sub ONU works in bridge mode, and the main ONU uniformly allocates and manages an internet protocol (internet protocol, IP) address of the sub ONU and an IP address of a user terminal connected to the sub ONU, so that the FTTR networking forms a unified and interconnected local area network, and user terminals connected to the sub ONUs can implement local area network mutual access operations such as projection and file sharing under ultra-gigabit bandwidth.

To improve the security of the FTTR networking, an independent firewall device needs to be deployed. For example, in a scenario in which FTTR networking is deployed for an enterprise, because the enterprise has a higher security requirement, and a firewall capability of a main ONU cannot meet the security requirement of the enterprise, an independent firewall device needs to be additionally deployed. The main ONU is upstream connected to the OLT through the PON interface, but a network cable interface of the firewall device is usually not a PON interface. For example, the network cable interface of the firewall device is a LAN interface or a WAN interface. If an independent firewall device is connected between the OLT and the main ONU, referring to a diagram of connecting a firewall device shown in FIG. 2, the PON interface of the main ONU needs to be changed to a LAN interface or a WAN interface. As a result, the main ONU cannot exert a capability of the PON interface, and needs an additional connected gateway device as a PON interface to connect to the OLT upstream, resulting in additional overheads.

Therefore, in the FTTR networking scenario, the firewall device can be connected to the main ONU in off-path mode through two LAN interfaces. All traffic for accessing an external network through the PON interface in the FTTR networking is transferred to the firewall device through the LAN interface, and the firewall device audits Internet access behavior of users. For example, refer to a diagram of connecting a firewall device in off-path mode shown in FIG. 3. A main ONU is upstream connected to an OLT through a PON2 interface, and downstream connected to a sub ONU through a PON1 interface, and a firewall device is connected in off-path mode through a LAN2 interface and a LAN1 interface.

For example, the main ONU receives, through the PON1 interface, a packet sent by the sub ONU. In a gigabit-capable passive optical network (gigabit-capable PON, GPON), the packet is encapsulated into a GPON encapsulation mode (GPON encapsulation mode, GEM) frame. A frame header of the GEM frame includes GEM port (port) information, a GEM port is a virtual port used to carry a service in the GPON, one GEM port corresponds to one piece of port identification (identification, ID), and the GEM port information can indicate a port of the sub ONU. After the firewall device is connected to the main ONU in off-path mode, the main ONU needs to encapsulate the received packet into an Ethernet frame in a virtual local area network (virtual local area network, VLAN) information and MAC information-based bridge forwarding manner, and forward the packet to the LAN1 interface connected to the firewall device. The packet is sent to the firewall device through the LAN1 interface, and the firewall device forwards the packet to the main ONU. Bridge forwarding is used to connect two different local area networks, reassemble, based on a format of the other local area network, a packet received from one local area network, and send the packet to a physical layer of the other local area network.

In this case, the main ONU receives, again through the LAN2 interface connected to the firewall device, the packet sent by the firewall device, sends the packet to the PON2 interface through bridge forwarding or layer 3 network address translation (network address translation, NAT) forwarding, and sends the packet to the OLT through the PON2 interface. The packet received through the LAN2 interface is encapsulated into an Ethernet frame, and a frame header of the Ethernet frame does not include the GEM port information. Therefore, after the packet is forwarded by the firewall device, the original GEM port information is lost, and the main ONU cannot determine that the packet is sent through the port of the sub ONU. As a result, related services configured based on the port of the sub ONU are affected, for example, the packet cannot be processed according to a processing policy configured based on the port of the sub ONU.

Embodiments of this application provide a packet forwarding and processing method. A port tag and a tunnel header are encapsulated into the packet forwarded by the firewall device. Because the port tag indicates the port of the sub ONU, recording the port of the sub ONU is implemented by using the port tag. In addition, because the tunnel header indicates the firewall device to send a second packet to the main ONU, in a forwarding process based on the tunnel header, information about the port of the sub ONU does not need to be parsed, and the information about the port of the sub ONU can be protected from being lost in the forwarding process. In this way, when the packet that is sent by the sub ONU and that is received by the main ONU is forwarded by the firewall device and then returned to the main ONU, the information about the port of the sub ONU is not lost, and the packet can be processed according to the processing policy configured based on the port of the sub ONU.

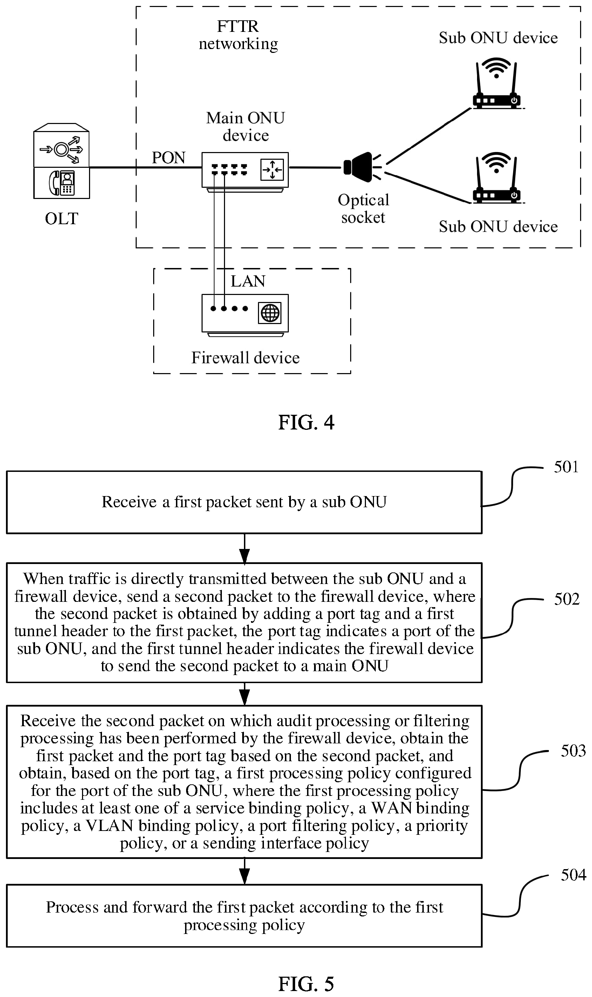

For example, FIG. 4 is a diagram of an implementation environment of a packet forwarding and processing method according to an embodiment of this application. The implementation environment includes an OLT, FTTR networking, and a firewall device. The FTTR networking includes a main ONU and a plurality of sub ONUs, and the main ONU and the plurality of sub ONUs are connected through an optical socket. The main ONU may be a main gateway or a main optical modem, and the sub ONU may be a sub gateway or a sub optical modem. Alternatively, the sub ONU may be an access point (access point, AP) device. A quantity of sub ONUs is not limited in this embodiment of this application. In FIG. 4, two sub ONUs are used as an example for illustration, and there may be fewer or more sub ONUs. Each sub ONU serves as a wireless access point and may be connected to terminals used by a plurality of users. The OLT is connected to the FTTR networking through a PON interface. The firewall device is connected to the main ONU in off-path mode through a LAN interface. The FTTR networking and the firewall device belong to two different local area networks and needs bridge forwarding.

FIG. 5 is a flowchart of a packet forwarding and processing method according to an embodiment of this application. The method may be applied to the implementation environment shown in FIG. 4, for example, performed by the main ONU to which the firewall device is connected in off-path mode shown in FIG. 4. As shown in FIG. 5, the packet forwarding and processing method includes the following step 501 to step 504.

Step 501: Receive a first packet sent by a sub ONU.

In this embodiment of this application, the main ONU includes a first PON interface, and the main ONU is downstream connected to the sub ONU through the first PON interface. Therefore, the first packet sent by the sub ONU can be received through the first PON interface. Optionally, a type of the first packet is not limited in this embodiment of this application. For example, the first packet may be a dial-up request packet, an external network access packet, a service data packet, or the like of a user terminal connected to the sub ONU in a wired or wireless manner.

Step 502: When traffic is directly transmitted between the sub ONU and the firewall device, send a second packet to the firewall device, where the second packet is obtained by adding a port tag and a first tunnel header to the first packet, the port tag indicates a port of the sub ONU, and the first tunnel header indicates the firewall device to send the second packet to the main ONU.

That traffic is directly transmitted between the sub ONU and the firewall device means that a next hop of traffic from the sub ONU is directly determined as the firewall device. In this embodiment of this application, the port tag and the first tunnel header are added to the received packet sent by the sub ONU, and then the packet is sent to the firewall device. For example, the main ONU further includes a first LAN interface and a second LAN interface, and the first LAN interface and the second LAN interface are connected to the firewall device, so that the firewall device is connected to the main ONU in off-path mode. The first PON interface of the main ONU is directly connected to the second LAN interface, so that traffic is directly transmitted between the sub ONU and the firewall device. That traffic is not directly transmitted between the sub ONU and the firewall device means that for traffic from the sub ONU, a next hop of a packet needs to be determined according to a forwarding policy, for example, a next-hop device is determined based on a routing table. The next hop that is of the packet and that is determined according to the forwarding policy does not include the firewall device.

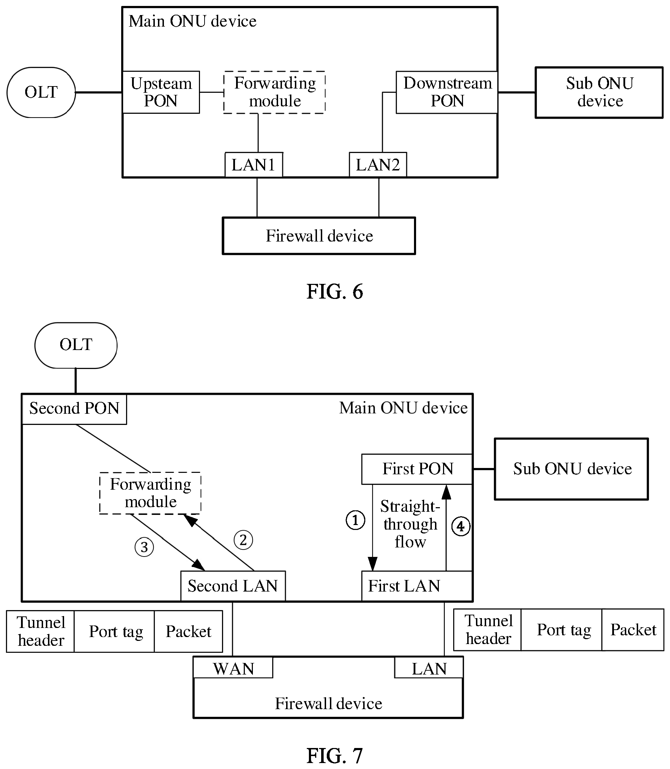

Refer to a diagram of connecting a firewall device in off-path mode shown in FIG. 6. A downstream PON interface in the main ONU is directly connected to a LAN2 interface, so that traffic is directly transmitted between the sub ONU and the firewall device. The downstream PON interface corresponds to the first PON interface in this embodiment of this application, a LAN1 interface corresponds to the second LAN interface in this embodiment of this application, and the LAN2 interface corresponds to the second LAN interface in this embodiment of this application. In this scenario, all packets received through the first PON interface are sent to the firewall device through the first LAN interface, and are processed by the firewall device and then forwarded, so that the security of the packet that is received through the first PON interface and that is forwarded by the main ONU can be improved. The main ONU needs to encapsulate the port tag and the first tunnel header into the first packet, to obtain the second packet, and then send the second packet to the firewall device through the first LAN interface.

In this embodiment of this application, the first packet that is sent by the sub ONU and that is received by the main ONU carries information indicating the port of the sub ONU. For example, the first packet carries GEM port information of the sub ONU, and the GEM port information can indicate the port of the sub ONU. A manner of setting the port tag is not limited in this embodiment of this application, provided that the port tag can be used to distinguish between ports of different sub ONUs. For example, a port tag of the sub ONU may be a private tag (Tag) or a VLAN Tag corresponding to the port of the sub ONU.

Optionally, an encapsulation type of the first tunnel header is not limited in this embodiment of this application, and first tunnel headers in different tunneling protocols may be flexibly used for encapsulation based on application scenarios. For example, the first tunnel header includes routing information, so that a packet with the first tunnel header encapsulated at an outermost layer can be transmitted in a network configured with the tunnel. The tunneling protocol includes but is not limited to a QinQ protocol, a virtual private network (virtual private network, VPN) protocol, a point-to-point tunneling protocol (point-to-point tunneling protocol, PPTP), or a layer 2 tunneling protocol (layer two tunneling protocol, L2TP). QinQ is short for 802.1Q-in-802.1Q. QinQ is also referred to as virtual local area network stacking (virtual local area network stacking, VLAN Stacking) or a double (Double) VLAN. VLAN space is expanded by adding a layer of 802.1Q tag to a packet that carries an 802.1Q tag. A manner of encapsulating the first tunnel header may be flexibly selected according to different tunneling protocols.

For example, the port tag is a VLAN Tag, and the first tunnel header is a QinQ VLAN. A manner of encapsulating the port tag and the first tunnel header into the first packet may be: encapsulating a layer of VLAN Tag at an outer layer of the first packet, and then encapsulating a layer of QinQ VLAN at an outer layer of the VLAN Tag, to implement forwarding of the packet by the firewall device by using the QinQ VLAN encapsulated at the outermost layer. Therefore, by encapsulating the port tag, the information about the port of the sub ONU may be carried in the forwarded packet, and by encapsulating the tunnel header, the packet is routed and forwarded based on the tunnel header at the outermost layer, and the port tag at the inner layer of the tunnel header is not parsed, thereby ensuring that the port tag is not lost in a forwarding process.

Step 503: Receive the second packet on which audit processing or filtering processing has been performed by the firewall device, obtain the first packet and the port tag based on the second packet, and obtain, based on the port tag, a first processing policy configured for the port of the sub ONU, where the first processing policy includes at least one of a service binding policy, a WAN binding policy, a VLAN binding policy, a port filtering policy, a priority policy, or a sending interface policy.

In this embodiment of this application, the firewall device performs audit processing or filtering processing on the received second packet. The audit processing may mean performing statistical analysis on the received second packet. The filtering processing may mean filtering out a packet that does not meet a security condition and not forwarding the packet, and forwarding a packet that meets the security condition to the main ONU based on the first tunnel header encapsulated at the outermost layer. The security condition may be flexibly set based on an application scenario. For example, the security condition enables the firewall device to perform processing such as antivirus monitoring and user security audit behavior management on user traffic. In this embodiment of this application, the routing information indicated by the first tunnel header is configured for the first LAN interface and the second LAN interface of the main ONU, and an interface that is of the firewall device and that is connected to the first LAN interface and an interface that is of the firewall device and that is connected to the second LAN interface, so that the second packet can be forwarded in firewall off-path mode based on the first tunnel header, and the packet can be forwarded based on the tunnel header without depending on a routing capability of the firewall device connected in off-path mode.

Because the second packet is obtained by encapsulating the port tag and the first tunnel header into the first packet, the first packet and the port tag can be obtained based on the second packet. For example, decapsulation processing is performed on the second packet, the first tunnel header at the outermost layer is stripped, and then the port tag and the first packet are obtained through parsing. Because the port tag indicates the port of the sub ONU, before receiving the first packet, the main ONU can obtain, based on the port tag and the corresponding first processing policy being configured for the port of the sub ONU, the first processing policy configured for the port of the sub ONU. Content of the first processing policy is not limited in this embodiment of this application, and different processing policies may be flexibly configured based on a service requirement in an application scenario.

The service binding policy may be binding the port of the sub ONU to a target service, so that a packet forwarding manner configured for the target service is applicable to the packet sent through the port of the sub ONU. The WAN binding policy may be binding the port of the sub ONU to a target WAN, so that a packet forwarding manner configured for the target WAN is applicable to the packet sent through the port of the sub ONU. The VLAN binding policy may be binding the port of the sub ONU to a target VAN, so that a packet forwarding manner configured for the target VAN is applicable to the packet sent through the port of the sub ONU. The port filtering policy may be a filtering condition, so that a packet that meets the filtering condition in packets sent through the port of the sub ONU can be forwarded, and a packet that does not meet the filtering condition is not forwarded. The priority policy may be configuring different forwarding priorities for different ports, so that a packet sent through a port with a higher priority can be forwarded first. The sending interface policy may be specifying different forwarding interfaces for different ports, so that packets sent through different ports can be forwarded through the specified interfaces.

Step 504: Process and forward the first packet according to the first processing policy.

In this embodiment of this application, because the first processing policy configured for the port of the sub ONU can be obtained based on the port tag, the first packet sent through a port corresponding to the second LAN interface can still be processed as the packet sent through the port of the sub ONU, and use of a related configuration of the port of the sub ONU is not affected. The main ONU receives the first packet twice through the first PON interface and the second LAN interface. When the first packet is received for the first time through the first PON interface, because the first packet is sent through the port of the sub ONU, the information indicating the port of the sub ONU is also received when the first packet is received, that is, the port of the sub ONU is an original port for sending the first packet. When the first packet is received for the second time through the second LAN interface, although the first packet is sent through the port corresponding to the second LAN interface, it can be determined, based on the port tag encapsulated at the outer layer of the first packet, that the original port of the first packet is the port of the sub ONU. Therefore, after the firewall device is connected in off-path mode, the processing policy configured based on the port is not affected.

In this way, the forwarding process in which the firewall device performs off-path processing on the first packet sent upstream from the user-side sub ONU to the main ONU is implemented in the foregoing process, and the first packet can still be processed according to the first processing policy based on the port tag. After a processed third packet is obtained, normal routing and forwarding can be performed based on a destination address of the third packet. For different first processing policies, the third packet may be the same as or different from the first packet. In this embodiment of this application, the main ONU further includes a second PON interface, and the second PON interface is downstream connected to the sub ONU. Optionally, a manner of forwarding the third packet may be: sending the third packet to an OLT through the second PON interface based on the destination address of the third packet.

FIG. 7 is a diagram of a packet forwarding process in the scenario in which the firewall device is connected in off-path mode shown in FIG. 6. A process of performing off-path processing on the packet received through the user-side first PON interface is: ① Based on the first PON interface being directly connected to the first LAN interface, the main ONU directly encapsulates a layer of port tag at an outer layer of the packet, encapsulates a layer of tunnel header at an outer layer of the port tag, and then sends the packet to the LAN interface of the firewall device through the first LAN interface. The firewall device performs filtering processing on the received packet, filters out a packet that does not meet the security condition and does not forward the packet, forwards a packet that meets the security condition to a WAN interface based on the tunnel header encapsulated at the outermost layer, and forwards the packet to the second LAN interface of the main ONU through the WAN interface in off-path mode. After the packet is forwarded by the firewall device, ② after receiving the packet through the second LAN interface, the main ONU strips, by using a forwarding module, the tunnel header that is at the outermost layer, obtains, based on the port tag at the inner layer of the tunnel header, the information about the port that is of the sub ONU and that is for originally sending the packet, and then processes and forwards the packet according to the processing policy configured for the port of the sub ONU, without affecting a management function of the main ONU for the original port of the sub ONU. The main ONU further includes a processor, where the processor is configured to implement an operation performed by the forwarding module, and the forwarding module, as a software virtualization module, is configured to perform a related operation of forwarding the packet from the main ONU.

In addition, for the received first packet, the main ONU may further learn source address information such as MAC carried in the first packet to a corresponding port, to implement routing and forwarding of another packet received subsequently. However, after the firewall device is connected to the main ONU in off-path mode, because a same first packet enters the main ONU once through the first PON interface, and enters the main ONU again through the second LAN interface after being forwarded by the firewall device, a MAC entry of a same user may be learned to a port that is of the sub ONU and that is connected to the first PON interface and a port that is of the firewall device and that is connected to the second LAN interface. Consequently, a route query result based on the MAC entry of the user is inaccurate, and the main ONU cannot perform normal user management. For example, a user topology that is of the sub ONU connected to the main ONU and that is displayed by the main ONU is inaccurate, and a user connected to the first PON interface may be displayed as being connected to the second LAN interface.

Therefore, in this embodiment of this application, after the first packet and the port tag are obtained based on the second packet, a correspondence between the source address information of the first packet and the port that is of the sub ONU and that is indicated by the port tag may be further stored. The source address information may include MAC information and ARP information. In this case, a manner of determining, based on a destination address of a fourth packet, that a destination port of the fourth packet is the port of the sub ONU may be: determining, from the correspondence based on the destination address of the fourth packet indicating the MAC information and the ARP information, that the destination port of the fourth packet is the port of the sub ONU. In this case, a manner of determining, based on the destination address of the fourth packet, that the destination port of the fourth packet is the port of the sub ONU is determining, based on the correspondence and the destination address of the fourth packet being the MAC information and the ARP information, that the destination port of the fourth packet is the port of the sub ONU.

In other words, after the main ONU receives, through the first PON interface, the first packet sent by the sub ONU, because the first PON interface is directly connected to the first LAN interface, the main ONU first does not learn the source address information of the first packet. After receiving, through the second LAN interface, the second packet sent by the firewall device based on the first tunnel header, the main ONU obtains the first packet and the port tag based on the second packet, and further learns the source address information of the first packet to the port that is of the sub ONU and that is indicated by the port tag, that is, stores the correspondence between the source address information of the first packet and the port that is of the sub ONU and that is indicated by the port tag. In this way, although the main ONU receives the first packet twice through the first PON interface and the second LAN interface, the source address information of the first packet is learned only to the port that is of the sub ONU and that is indicated by the port tag, the source address information of the first packet is not learned twice and is not incorrectly learned to the port corresponding to the second LAN interface, thereby improving accuracy of obtaining the correspondence based on the first packet, and further improving accuracy of determining the port based on the correspondence.

In a possible implementation, when traffic is not directly transmitted between the sub ONU and the firewall device, a process in which the main ONU forwards and processes the first packet is: obtaining, based on the information about the port of the sub ONU, the first processing policy configured for the port of the sub ONU, and processing the first packet according to the first processing policy, to obtain the processed third packet; when a next hop of the third packet indicates the OLT, and traffic is directly transmitted between the OLT and the firewall device, sending the third packet to the firewall device; and receiving the third packet on which audit processing or filtering processing has been performed by the firewall device, and sending the third packet to the OLT.

For example, after the main ONU receives, through the first PON interface, the first packet sent by the sub ONU, when the first PON interface is not directly connected to the first LAN interface, the main ONU obtains, based on the information about the port of the sub ONU, the first processing policy configured for the port of the sub ONU, and processes the first packet according to the first processing policy, to obtain the third packet. When the destination address of the third packet indicates the second PON interface and the second PON interface is directly connected to the second LAN interface, the main ONU converts the second PON interface indicated by the destination address of the third packet into the first LAN interface, and sends the third packet to the firewall device through the first LAN interface; and receives, through the second LAN interface, the third packet sent by the firewall device, and sends the third packet to the OLT through the second PON interface.

In this way, the third packet sent by the main ONU is processed by the firewall device before being sent to the OLT through the second PON interface, and then forwarded to the second PON interface, thereby improving the security of the third packet sent through the second PON interface. In addition, the main ONU can be connected to the OLT through the PON interface, so that the main ONU can not only exert a capability of the PON interface, but also perform filtering, through the LAN interface by using the firewall device, on the third packet sent to the OLT.

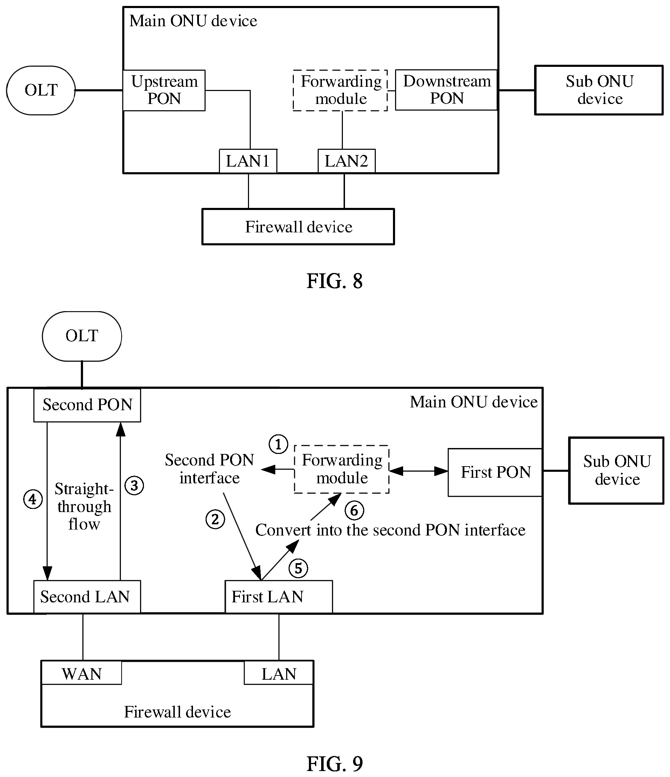

Refer to a diagram of connecting a firewall device in off-path mode shown in FIG. 8. A downstream PON interface of a main ONU is not directly connected to a LAN2 interface, and a forwarding module is configured for forwarding. An upstream PON interface of the main ONU is directly connected to a LAN1 interface, that is, traffic is directly transmitted between an OLT and the firewall device. The upstream PON interface corresponds to the second PON interface in this embodiment of this application, the downstream PON interface corresponds to the first PON interface in this embodiment of this application, the LAN1 interface corresponds to the second LAN interface in this embodiment of this application, and the LAN2 interface corresponds to the second LAN interface in this embodiment of this application. In this scenario, the main ONU first processes, according to an originally configured processing policy, a first packet received through the first PON interface, and then forwards the first packet through an egress interface by using the firewall device.

For example, in a packet forwarding process shown in FIG. 9, a process of performing off-path processing on the packet received through the user-side first PON interface is: ① The main ONU determines, based on the forwarding module, that the packet needs to be sent through the second PON interface. ② The main ONU converts the packet that needs to be sent through the second PON interface as to be sent through the first LAN interface and then sends the packet to a LAN interface of the firewall. After the packet is forwarded to the second LAN interface by the firewall device, ③ the main ONU directly sends, through the second PON interface, the packet received through the second LAN interface to the OLT. In other words, before the user-side packet sent upstream to the OLT is forwarded by the main ONU to the upstream PON interface, filtering needs to be first performed on the packet by the firewall device, and then the packet is sent to the OLT through the upstream PON interface.

In a possible implementation, in addition to the user-side packet sent upstream to the OLT, the main ONU further receives a fourth packet sent by the OLT downstream to the user side, for example, receives, through the second PON interface, the fourth packet sent by the OLT downstream to the user side. Optionally, after receiving the fourth packet sent by the OLT, when traffic is directly transmitted between the OLT and the firewall device, the main ONU sends the fourth packet to the firewall device; and receives the fourth packet on which audit processing or filtering processing has been performed by the firewall device, and forwards the fourth packet in a manner of receiving the fourth packet sent by the OLT.

That traffic is directly transmitted between the OLT and the firewall device means that a next hop of traffic from the OLT is directly determined as the firewall device. In this embodiment of this application, the received packet sent by the OLT is sent to the firewall device. For example, the second PON interface of the main ONU is directly connected to the first LAN interface, so that traffic is directly transmitted between the OLT and the firewall device. That traffic is not directly transmitted between the OLT and the firewall device means that for traffic from the OLT, a next hop of a packet needs to be determined according to a forwarding policy, for example, a next-hop device is determined based on a routing table. The next hop that is of the packet and that is determined according to the forwarding policy does not include the firewall device.

For example, the fourth packet sent by the OLT is received through the second PON interface; when the second PON interface is directly connected to the second LAN interface, the fourth packet is sent to the firewall device through the second LAN interface; the fourth packet sent by the firewall device is received through the first LAN interface, and the first LAN interface for receiving the fourth packet is converted into the second PON interface; and the fourth packet is forwarded in a manner of receiving the fourth packet through the second PON interface. In other words, the firewall device first performs filtering processing on the fourth packet received through the second PON interface, and the main ONU processes the fourth packet according to an originally configured processing policy, and then forwards the fourth packet through the egress interface. A type of the fourth packet is not limited in this embodiment of this application. For example, the fourth packet may be a service data packet or a user configuration packet delivered by the OLT.

In this way, the fourth packet that is sent by the OLT and that is received through the second PON interface can be processed by the firewall device and then forwarded, to improve the security of the fourth packet forwarded by the main ONU. In addition, after the fourth packet enters the main ONU again from the firewall device, the main ONU can simulate the fourth packet received through the first LAN interface as the fourth packet received through the second PON interface, and still process the fourth packet received through the first LAN interface as processing the fourth packet received through the second PON interface. In other words, a manner in which the main ONU processes, after the firewall device is connected to the main ONU in off-path mode, the fourth packet sent by the OLT is the same as a manner in which the main ONU processes, before the firewall device is connected to the main ONU in off-path mode, the fourth packet sent by the OLT. Accuracy of packet forwarding and processing is not affected by the firewall device connected in off-path mode, thereby improving accuracy of packet forwarding and processing.

Refer to the diagram of connecting the firewall device in off-path mode shown in FIG. 8. After the upstream PON interface of the main ONU receives a packet, because the upstream PON interface is directly connected to the LAN1 interface, the packet is directly sent to the firewall device through the LAN 1 interface. In this scenario, before the packet received through the upstream PON interface enters the forwarding module, filtering processing is first performed on the packet by the firewall device in off-path mode, and then the packet is forwarded to the user-side sub ONU via the forwarding module. In this way, the main ONU performs off-path processing on traffic from the upstream PON interface by using straight-through flows and disguise of the upstream PON interface, which does not affect a management function of the main ONU on the connected sub ONU, and facilitates interception processing of the firewall on the traffic from the upstream PON interface.

For example, in the packet forwarding process shown in FIG. 9, a process of performing off-path processing on the packet received through the network-side second PON interface is: ④ The main ONU directly sends, by using a straight-through flow, the packet received through the second PON interface to the firewall device through the second LAN interface, and then sends the packet to a WAN interface of the firewall. After the firewall device forwards the packet to the first LAN interface, ⑤ the main ONU converts the packet received through the first LAN interface a packet received through the second PON interface, to simulate a packet entering through the upstream second PON interface. ⑥ The main ONU forwards and processes, by using the forwarding module based on the packet entering through the second PON interface, the packet received through the first LAN interface.

In a possible implementation, after the main ONU receives the fourth packet sent by the OLT, when traffic is not directly transmitted between the OLT and the firewall device, the main ONU determines, based on a destination address of the fourth packet, that a destination port of the fourth packet is the port of the sub ONU; when a next hop of the fourth packet indicates the sub ONU and traffic is directly transmitted between the sub ONU and the firewall device, sends a fifth packet to the firewall device, where the fifth packet is obtained by adding the port tag and a second tunnel header to the fourth packet, and the second tunnel header indicates the firewall device to send the fifth packet to the main ONU; and receives the fifth packet on which audit processing or filtering processing has been performed by the firewall device, obtains the fourth packet and the port tag based on the fifth packet, and sends the fourth packet to the sub ONU based on the port that is of the sub ONU and that is indicated by the port tag.

For example, when the second PON interface is not directly connected to the second LAN interface, a process of forwarding and processing the fourth packet by the main ONU is: determining, based on the destination address of the fourth packet, that the destination port of the fourth packet is the port of the sub ONU; when the destination address of the fourth packet indicates the first PON interface and the first PON interface is directly connected to the first LAN interface, converting the first PON interface indicated by the destination address of the fourth packet into the second LAN interface, and sending the fifth packet to the firewall device through the second LAN interface, where the fifth packet is obtained by encapsulating the port tag and the second tunnel header into the fourth packet, and the second tunnel header indicates a forwarding path of the fifth packet through the firewall device; and receiving, through the first LAN interface, the fifth packet sent by the firewall device based on the second tunnel header, and sending, through the first PON interface, the fifth packet to the port that is of the sub ONU and that is indicated by the port tag. For an encapsulation manner of the second tunnel header, refer to the encapsulation manner of the first tunnel header. Details are not described herein again.

Therefore, the fourth packet sent by the main ONU is processed by the firewall device before being sent to the sub ONU through the first PON interface, and then forwarded to the first PON interface, thereby improving the security of the fourth packet sent through the first PON interface. In addition, the fifth packet is obtained by encapsulating the port tag and the second tunnel header into the fourth packet, so that the firewall device can perform routing and forwarding on the fifth packet based on the second tunnel header. After the firewall device forwards the fifth packet to the first LAN interface of the main ONU, the main ONU can obtain the port tag encapsulated at an inner layer and the fourth packet based on the fifth packet, and determine, based on the port tag, that the fourth packet is sent to the port of the sub ONU, thereby improving accuracy of packet forwarding and processing after the firewall device is connected in off-path mode.

Refer to the diagram of connecting the firewall device in off-path mode shown in FIG. 6. An upstream PON interface of the main ONU is not directly connected to the LAN1 interface, and a forwarding module is configured for forwarding. The downstream PON interface of the main ONU is directly connected to the LAN2 interface. The upstream PON interface corresponds to the second PON interface in this embodiment of this application. In this scenario, the packet received through the upstream PON interface is first forwarded by the forwarding module, filtering processing is first performed on the packet by the firewall device in off-path mode, and then the packet is forwarded to the user-side sub ONU through the downstream PON interface. The main ONU gateway supports off-path device configuration, and performs off-path processing on traffic from the upstream PON interface by using bidirectional straight-through flows and disguise of the upstream interface. This does not affect a management function of the main FTTR for an originally connected AP, and facilitate interception processing of the firewall on external network egress traffic from the upstream PON interface. The solution has high forwarding performance, does not occupy CPU resources, and occupies few forwarding resources.

For example, in the packet forwarding process shown in FIG. 7, a process of performing off-path processing on a packet received through a network-side second PON interface is: ③ The main ONU determines the port of the sub ONU by using a forwarding module, processes the packet according to the processing policy configured for the port of the sub ONU, encapsulates a layer of port tag at an outer layer of the processed packet, encapsulates a layer of tunnel header at an outer layer of the port tag, and then sends the processed packet to the WAN interface of the firewall device through the second LAN interface. The firewall device performs filtering processing on the received packet, filters out a packet that does not meet the security condition and does not forward the packet, forwards a packet that meets the security condition to the LAN interface based on the tunnel header encapsulated at the outermost layer, and forwards the packet to the first LAN interface of the main ONU through the LAN interface in off-path mode. After the packet is forwarded by the firewall device, ④ after receiving the packet through the first LAN interface, the main ONU strips the tunnel header at the outermost layer, and determines the port of the sub ONU based on the port tag at the inner layer of the tunnel header. Because the first LAN interface is directly connected to the first PON interface, the packet is directly sent to the port of the sub ONU through the first PON interface.

According to the method provided in this embodiment of this application, the firewall device is connected to the first LAN interface and the second LAN interface of the main ONU in off-path mode, so that the first packet that is sent by the sub ONU and that is received through the first PON interface can be processed by the firewall device and then forwarded, thereby improving the security of the first packet forwarded by the main ONU. In addition, the second packet is obtained by encapsulating the port tag and the first tunnel header into the first packet, so that the firewall device can perform routing and forwarding on the second packet based on the first tunnel header. After the firewall device forwards the second packet to the second LAN interface of the main ONU, the main ONU can obtain the port tag encapsulated at the inner layer and the first packet based on the second packet, and determine, based on the port tag, that the first packet is originally sent through the port of the sub ONU, that is, information about the original port of the first packet is not lost, so that the main ONU can still process, according to the first processing policy configured for the port of the sub ONU, the first packet received through the second LAN interface. In other words, a manner in which the main ONU processes, after the firewall device is connected to the main ONU in off-path mode, the first packet sent by the sub ONU is the same as a manner in which the main ONU processes, before the firewall device is connected to the main ONU in off-path mode, the first packet sent by the sub ONU. Packet processing performance is not affected by the firewall device connected in off-path mode, thereby improving accuracy of packet forwarding and processing.

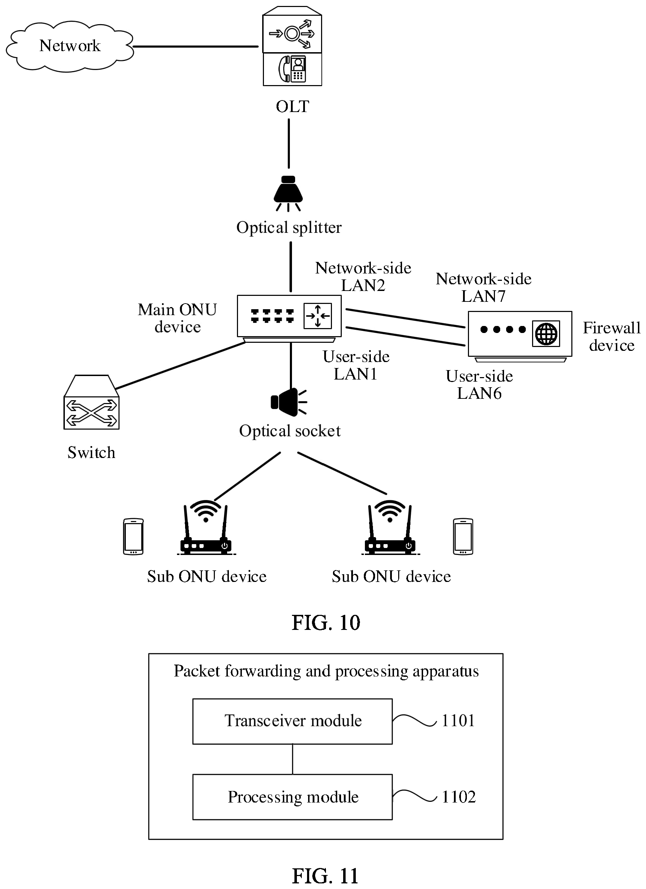

The following describes, based on a networking architecture shown in FIG. 10, a packet forwarding and processing method provided in this embodiment of this application by using an example. In FIG. 10, an OLT is upstream connected to an external network, and is downstream connected to a main ONU through an optical splitter. A connection line between the OLT and the main ONU is an optical fiber. The main ONU is downstream connected to a plurality of sub ONUs through an optical socket, and connection lines between the main ONU and the plurality of sub ONUs are photoelectric composite cables. Optionally, the main ONU is further downstream connected to a switch through a network cable. The main ONU enables off-path mode, that is, the main ONU reserves a network-side LAN2 interface and a user-side LAN1 interface for connecting a firewall device in off-path mode. For example, the network-side LAN2 interface is connected to a network-side LAN7 of the firewall device, and the user-side LAN1 interface of the sub ONU is connected to a user-side LAN6 of the firewall device. A manner in which the firewall device is connected to the main ONU in off-path mode in FIG. 10 is the same as that in FIG. 6. Physically, the main ONU is connected to a PON interface of the OLT. Logically, all external network traffic such as traffic delivered by the OLT needs to be processed by the firewall device before downlink transmission is performed. For example, a tunnel header is a QinQ VLAN. The same QinQ VLAN is configured for the LAN2 interface and the LAN1 interface of the main ONU and the LAN6 interface and the LAN7 interface of the firewall device in off-path mode. A tunnel header at an outermost layer is encapsulated for a packet by using the QinQ VLAN, to implement bridge forwarding of the packet through transparent transmission, so that the packet is forwarded by the firewall device without losing a port tag encapsulated at an inner layer of the QinQ VLAN.

Packet processing and forwarding in an Internet access process of a user is used as an example for detailed description. A user terminal is an intranet terminal device, the intranet terminal device is connected to any sub ONU, and the user accesses an external network according to a dynamic host configuration protocol (dynamic host configuration protocol, DHCP). For example, the intranet terminal device sends a DHCP dialup request packet to the sub ONU, and the sub ONU sends the DHCP dialup request packet to the main ONU through an upstream PON interface, where the DHCP dialup request packet carries GEM port information of the sub ONU. For example, the sub ONU encapsulates the DHCP dialup request packet into a GEM frame, where a load of the GEM frame includes the DHCP dialup request packet, and a frame header of the GEM frame includes the GEM port information of the sub ONU. The sub ONU sends the GEM frame to the main ONU through the upstream PON interface.

After receiving, through a downstream PON interface, the DHCP dialup request packet and the GEM port information that are sent by the sub ONU, the main ONU may convert the GEM port information of the sub ONU into port information of the sub ONU. When the sub ONU is an AP device, the GEM port information of the sub ONU may be converted into AP port information. The main ONU locally stores and manages a correspondence between the port information of the sub ONU and a port tag, where the port tag may be a private VLAN Tag. The main ONU adds a layer of private VLAN Tag to the DHCP dialup request packet, and then adds a layer of QinQ VLAN. The adding corresponds to the foregoing encapsulation. After receiving the DHCP dialup request packet encapsulated with the VLAN Tag and the QinQ VLAN, the main ONU directly forwards the packet to the user-side LAN1 interface of the main ONU. The main ONU does not learn MAC address information and ARP information of the DHCP dialup request packet.

The user-side LAN1 interface of the main ONU is directly connected to the user-side LAN6 interface of the firewall device. Therefore, the DHCP dialup request packets sent to the user-side LAN1 interface of the main ONU are directly sent to the user-side LAN6 interface of the firewall device. After the firewall device receives, through the user-side LAN6 interface, the DHCP dialup request packet with the QinQ VLAN Tag encapsulated at the outer layer and the VLAN Tag carried at the inner layer, because the same QinQ VLAN is configured for the user-side LAN6 interface and network-side LAN7 interface, the firewall device performs layer 2 bridge forwarding at the QinQ VLAN layer, and forwards the DHCP dialup request packet encapsulated with the VLAN Tag and the QinQ VLAN to the network-side LAN7 interface of the firewall device.

Because the network-side LAN7 interface of the firewall device is directly connected to the network-side LAN2 interface of the main ONU, when the network-side LAN2 interface of the main ONU receives the DHCP dialup request packet encapsulated with the VLAN Tag and the QinQ VLAN, the main ONU first performs decapsulation processing, that is, strips the QinQ VLAN layer tunnel header, restores the port information of the sub ONU from the VLAN Tag, and forwards and processes the DHCP dialup request packet based on the DHCP dialup request packet received from the restored sub ONU port. For example, the MAC information and the ARP information in a source address of the DHCP dialup request packet are learned to the corresponding port of the sub ONU. In other words, the MAC information and the ARP information that are of the user and that are under the port of the sub ONU are obtained, and are not learned to the network-side LAN2 interface because the packet is incorrectly considered as a packet sent through the network-side LAN2 interface. Therefore, although the DHCP dialup request packet sent from the port of the sub ONU but forwarded by the firewall device enters the main ONU twice, the main ONU learns the MAC information and the ARP information only once, and learns the MAC information and the ARP information to the port of the sub ONU. This ensures that after the firewall device is connected to the main ONU in off-path mode, topology management of the main ONU for the original user under the port of the sub ONU is not affected.

After receiving the DHCP dialup request packet that is of the intranet terminal device and that is sent by the sub ONU, a DHCP service (Server) module of the main ONU responds to the DHCP dialup request packet, for example, allocates an internet protocol (internet protocol, IP) address to the intranet terminal device corresponding to the DHCP dialup request packet. The main ONU returns a DHCP dialup response packet corresponding to the DHCP dialup request packet to the intranet terminal device, where the DHCP dialup response packet includes the allocated IP address; adds a layer of VLAN Tag corresponding to the port of the sub ONU at an outer layer of the DHCP dialup response packet, and then adds a layer of QinQ VLAN. The main ONU sends, to the network-side LAN7 interface of the firewall device through the network-side LAN2 interface, the DHCP dialup response packet encapsulated with the VLAN Tag and the QinQ VLAN.

After receiving, through the network-side LAN7 interface, the DHCP dialup response packet with the QinQ VLAN encapsulated at the outer layer and the VLAN Tag carried at the inner layer, the firewall device performs layer 2 bridge forwarding based on the QinQ VLAN, and sends the DHCP dialup response packet encapsulated with the VLAN Tag and the QinQ VLAN to the user-side LAN6 interface. Because the user-side LAN6 interface of the firewall device is directly connected to the user-side LAN 1 interface of the main ONU, when the user-side LAN1 interface of the main ONU receives the DHCP dialup response packet encapsulated with the VLAN Tag and the QinQ VLAN, the main ONU first performs decapsulation processing, that is, strips the QinQ VLAN layer tunnel header, restores the port information of the sub ONU from the VLAN Tag, and sends the DHCP dialup response packet to the sub ONU through the downstream PON interface based on the port information of the sub ONU.

After receiving the DHCP dialup response packet returned to the intranet terminal device, the sub ONU performs bridge forwarding on the DHCP dialup response packet to the intranet terminal device based on a destination MAC address of the DHCP dialup response packet, and the intranet terminal device obtains the IP address allocated by the main ONU according to the DHCP, so that the intranet terminal device can access the external network based on the IP address.

When the intranet terminal device accesses the external network, forwarding and processing of upstream traffic sent by the intranet terminal device to the external network is similar to forwarding and processing of the DHCP dialup request packet. An upstream traffic packet is sent to the user-side LAN1 interface of the main ONU, forwarded by the user-side LAN6 interface and the network-side LAN7 interface of the firewall device, and then sent to the network-side LAN2 interface of the main ONU. The main ONU forwards the upstream traffic packet to the OLT through the upstream PON interface of the main ONU through layer 3 routing and forwarding, and then accesses the external network upstream through the OLT.

After downlink traffic from the external network to the intranet terminal device is forwarded by the OLT to the upstream PON interface of the main ONU, the main ONU performs layer 3 forwarding. Based on a correspondence that is between the port of the sub ONU and the MAC information and the ARP information and that is learned during the dialup request, it can be found that a destination port corresponding to a downlink traffic packet is the port of the sub ONU. In this way, forwarding and processing of the downlink traffic packet by the main ONU is similar to the forwarding and processing of the DHCP dialup response packet. The downlink traffic packet is forwarded to the firewall device through the network-side LAN2 interface, forwarded through the network-side LAN7 interface and the user-side LAN6 interface of the firewall device, and then sent to the user-side LAN1 interface of the main ONU. The main ONU sends the downlink traffic packet to the sub ONU through the downstream PON interface based on the port information of the sub ONU, and the sub ONU performs bridge forwarding on the packet to the intranet terminal device.

The foregoing describes the packet forwarding and processing methods in embodiments of this application. Corresponding to the foregoing methods, an embodiment of this application further provides a packet forwarding and processing apparatus. FIG. 11 is a diagram of a structure of a packet forwarding and processing apparatus according to an embodiment of this application. The apparatus is used in a main ONU. Based on the following plurality of modules shown in FIG. 11, the packet forwarding and processing apparatus shown in FIG. 11 can perform all or some of the operations performed by the main ONU shown in FIG. 5. It should be understood that the apparatus may include more additional modules than the shown modules, or some of the shown modules are omitted. This is not limited in this embodiment of this application. As shown in FIG. 11, the apparatus includes:
a transceiver module 1101, configured to perform a receiving and/or sending-related operation performed by the main ONU in the method shown in FIG. 5; and
a processing module 1102, configured to perform an operation other than the receiving and/or sending-related operation performed by the main ONU in the method shown in FIG. 5.

In a possible implementation, the transceiver module 1101 includes a receiving module and/or a sending module. The receiving module is configured to perform the receiving-related operation, and the sending module is configured to perform the sending-related operation.

In a possible implementation, the transceiver module 1101 is configured to: receive a first packet sent by a sub ONU; when traffic is directly transmitted between the sub ONU and a firewall device, send a second packet to the firewall device, where the second packet is obtained by adding a port tag and a first tunnel header to the first packet, the port tag indicates a port of the sub ONU, and the first tunnel header indicates the firewall device to send the second packet to the main ONU; and receive the second packet on which audit processing or filtering processing has been performed by the firewall device. The processing module 1102 is configured to: obtain the first packet and the port tag based on the second packet, obtain, based on the port tag, a first processing policy configured for the port of the sub ONU, where the first processing policy includes at least one of a service binding policy, a WAN binding policy, a VLAN binding policy, a port filtering policy, a priority policy, or a sending interface policy; and process and forward the first packet according to the first processing policy.

In a possible implementation, the first packet carries information indicating the port of the sub ONU. The processing module 1102 is further configured to: when traffic is not directly transmitted between the sub ONU and the firewall device, obtain, based on the information about the port of the sub ONU, the first processing policy configured for the port of the sub ONU, and process the first packet according to the first processing policy, to obtain a processed third packet. The transceiver module 1101 is further configured to: when a next hop of the third packet indicates an OLT, and traffic is directly transmitted between the OLT and the firewall device, send the third packet to the firewall device; and receive the third packet on which audit processing or filtering processing has been performed by the firewall device, and send the third packet to the OLT.

In a possible implementation, the transceiver module 1101 is further configured to: receive a fourth packet sent by the OLT; when traffic is directly transmitted between the OLT and the firewall device, send the fourth packet to the firewall device; and receive the fourth packet on which audit processing or filtering processing has been performed by the firewall device, and forward the fourth packet in a manner of receiving the fourth packet sent by the OLT.

In a possible implementation, the processing module 1102 is further configured to: when traffic is not directly transmitted between the OLT and the firewall device, determine, based on a destination address of the fourth packet, that a destination port of the fourth packet is the port of the sub ONU. The transceiver module 1101 is further configured to: when a next hop of the fourth packet indicates the sub ONU and traffic is directly transmitted between the sub ONU and the firewall device, send a fifth packet to the firewall device, where the fifth packet is obtained by adding the port tag and a second tunnel header to the fourth packet, and the second tunnel header indicates the firewall device to send the fifth packet to the main ONU; and receive the fifth packet on which audit processing or filtering processing has been performed by the firewall device, obtain the fourth packet and the port tag based on the fifth packet, and send the fourth packet to the sub ONU based on the port that is of the sub ONU and that is indicated by the port tag.

In a possible implementation, the processing module 1102 is further configured to: store a correspondence between source address information of the first packet and the port that is of the sub ONU and that is indicated by the port tag, where the source address information includes MAC information and ARP information; and determine, from the correspondence based on the destination address of the fourth packet indicating the MAC information and the ARP information, that the destination port of the fourth packet is the port of the sub ONU.

It should be understood that, when the apparatus provided in FIG. 11 implements functions of the apparatus, division into the foregoing functional modules is merely used as an example for description. During actual application, the foregoing functions may be allocated to different functional modules for implementation as required. In other words, an inner structure of a device is divided into different functional modules, to implement all or some of the functions described above. In addition, the apparatus provided in the foregoing embodiment and the method embodiments belong to a same concept. For a specific implementation process, refer to the method embodiments. Details are not described herein again. For beneficial effects generated by the apparatus provided in FIG. 11, refer to the beneficial effects of the method shown in FIG. 5. Details are not described herein again.

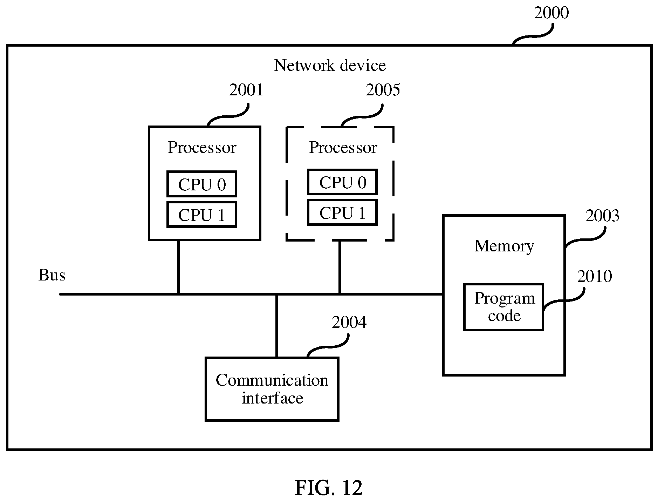

FIG. 12 is a diagram of a structure of a network device 2000 according to an example embodiment of this application. The network device 2000 shown in FIG. 12 is configured to perform operations related to the packet forwarding and processing method shown in FIG. 5. The network device 2000 is, for example, a switch or a router. The network device 2000 may be implemented by using a general bus architecture.

As shown in FIG. 12, the network device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 2001 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor may implement or execute various logical blocks, modules, and circuits described with reference to the content disclosed in embodiments of the present invention. Alternatively, the processor may be a combination of processors implementing a computing function, for example, a combination including one or more microprocessors, or a combination of a DSP and a microprocessor.

Optionally, the network device 2000 further includes a bus. The bus is configured to transmit information between components of the network device 2000. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, only one line is used in FIG. 12 for representation, but this does not mean that there is only one bus or only one type of bus.

The memory 2003 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or another optical disk storage, an optical disk storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer, but is not limited thereto. For example, the memory 2003 exists independently, and is connected to the processor 2001 through the bus. Alternatively, the memory 2003 and the processor 2001 may be integrated together.

The communication interface 2004 is configured to communicate with another device or a communication network by using any transceiver-type apparatus. The communication network may be an Ethernet, a radio access network (radio access network, RAN), a wireless local area network (wireless local area network, WLAN), or the like. The communication interface 2004 may include a wired communication interface, and may further include a wireless communication interface. Specifically, the communication interface 2004 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 2004 may be used by the network device 2000 to communicate with another device.

During specific implementation, in an embodiment, the processor 2001 may include one or more CPUs, for example, a CPU 0 and a CPU 1 shown in FIG. 12. Each of the processors may be a single-core processor (single-core CPU), or may be a multi-core processor (multi-core CPU). The processor herein may be one or more devices, circuits, and/or processing cores configured to process data (for example, computer program instructions).

During specific implementation, in an embodiment, the network device 2000 may include a plurality of processors, for example, the processor 2001 and a processor 2005 shown in FIG. 12. Each of the processors may be a single-core processor (single-core CPU), or may be a multi-core processor (multi-core CPU). The processor herein may be one or more devices, circuits, and/or processing cores configured to process data (for example, computer program instructions).

During specific implementation, in an embodiment, the network device 2000 may further include an output device and an input device. The output device communicates with the processor 2001, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 2001, and may receive an input from a user in a plurality of manners. For example, the input device may be a mouse, a keyboard, a touchscreen device, or a sensing device.

In some embodiments, the memory 2003 is configured to store program code 2010 for executing the solutions in this application, and the processor 2001 may execute the program code 2010 stored in the memory 2003. In other words, the network device 2000 may implement, by using the processor 2001 and the program code 2010 in the memory 2003, the packet forwarding and processing methods provided in the method embodiments. The program code 2010 may include one or more software modules. Optionally, the processor 2001 may also store program code or instructions for executing the solutions of this application.

In a specific embodiment, the network device 2000 in this embodiment of this application may correspond to the main ONU in the foregoing method embodiments, and the processor 2001 in the network device 2000 reads instructions in the memory 2003, so that the network device 2000 shown in FIG. 12 can perform all or some of operations performed by the main ONU.

Specifically, the processor 2001 is configured to: receive a first packet sent by a sub ONU; when traffic is directly transmitted between the sub ONU and a firewall device, send a second packet to the firewall device, where the second packet is obtained by adding a port tag and a first tunnel header to the first packet, the port tag indicates a port of the sub ONU, and the first tunnel header indicates the firewall device to send the second packet to the main ONU; receive the second packet on which audit processing or filtering processing has been performed by the firewall device; obtain the first packet and the port tag based on the second packet, obtain, based on the port tag, a first processing policy configured for the port of the sub ONU, where the first processing policy includes at least one of a service binding policy, a WAN binding policy, a VLAN binding policy, a port filtering policy, a priority policy, or a sending interface policy; and process and forward the first packet according to the first processing policy.

For brevity, another optional implementation is not described herein again.

The network device 2000 may further correspond to the packet forwarding and processing apparatus shown in FIG. 11, and each functional module in the packet forwarding and processing apparatus is implemented by using software of the network device 2000. In other words, the functional module included in the packet forwarding and processing apparatus is generated after the processor 2001 of the network device 2000 reads the program code 2010 stored in the memory 2003.

The steps of the packet forwarding and processing method shown in FIG. 5 are completed by an integrated logic circuit of hardware in the processor of the network device 2000 or instructions in a form of software. The steps of the methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory, and completes the steps of the foregoing methods in combination with hardware of the processor. To avoid repetition, details are not described herein again.

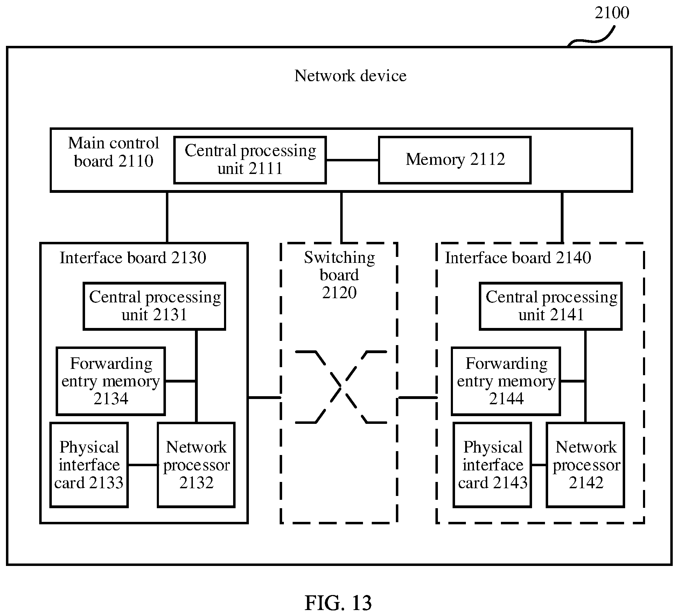

FIG. 13 is a diagram of a structure of a network device 2100 according to another example embodiment of this application. The network device 2100 shown in FIG. 13 is configured to perform all or some of operations in the packet forwarding and processing method shown in FIG. 5. The network device 2100 is, for example, a switch or a router. The network device 2100 may be implemented by using a general bus architecture.

As shown in FIG. 13, the network device 2100 includes a main control board 2110 and an interface board 2130.

The main control board is also referred to as a main processing unit (main processing unit, MPU) or a route processor card (route processor card). The main control board 2110 is configured to: control and manage each component in the network device 2100, including functions of route computation, device management, device maintenance, and protocol processing. The main control board 2110 includes a central processing unit 2111 and a memory 2112.

The interface board 2130 is also referred to as a line interface unit (line processing unit, LPU), a line card (line card), or a service board. The interface board 2130 is configured to provide various service interfaces and implement data packet forwarding. The service interfaces include but are not limited to an Ethernet interface, a POS (Packet over SONET/SDH) interface, and the like. The Ethernet interface is, for example, a flexible Ethernet service interface (Flexible Ethernet Client, FlexE Client). The interface board 2130 includes a central processing unit 2131, a network processor 2132, a forwarding entry memory 2134, and a physical interface card (physical interface card, PIC) 2133.

The central processing unit 2131 on the interface board 2130 is configured to control and manage the interface board 2130 and communicate with the central processing unit 2111 on the main control board 2110.

The network processor 2132 is configured to implement packet forwarding and processing. A form of the network processor 2132 may be a forwarding chip. The forwarding chip may be a network processor (network processor, NP). In some embodiments, the forwarding chip may be implemented by using an application-specific integrated circuit (application-specific integrated circuit, ASIC) or a field programmable gate array (field programmable gate array, FPGA). Specifically, the network processor 2132 is configured to forward a received packet based on a forwarding table stored in the forwarding entry memory 2134. If a destination address of the packet is an address of the network device 2100, the network processor 2132 sends the packet to a CPU (for example, the central processing unit 2131) for processing. If a destination address of the packet is not an address of the network device 2100, the network processor 2132 finds, from the forwarding table based on the destination address, a next hop and an egress interface that correspond to the destination address, and forwards the packet to the egress interface corresponding to the destination address. Processing an upstream packet may include: processing an ingress interface of the packet and searching a forwarding table. Processing a downlink packet may include: searching a forwarding table, and the like. In some embodiments, the central processing unit may also perform a function of a forwarding chip, for example, implement software forwarding based on a general-purpose CPU, so that the forwarding chip is not required in the interface board.

The physical interface card 2133 is configured to implement a physical layer interconnection function, so that original traffic ingresses the interface board 2130 from the physical interface card, and a processed packet is sent out from the physical interface card 2133. The physical interface card 2133 is also referred to as a subcard, may be installed on the interface board 2130, and is responsible for converting an optical/electrical signal into a packet, performing validity check on the packet, and then forwarding the packet to the network processor 2132 for processing. In some embodiments, the central processing unit 2131 may also perform a function of the network processor 2132, for example, implement software forwarding based on a general-purpose CPU, so that the network processor 2132 is not required in the physical interface card 2133.

Optionally, the network device 2100 includes a plurality of interface boards. For example, the network device 2100 further includes an interface board 2140. The interface board 2140 includes a central processing unit 2141, a network processor 2142, a forwarding entry memory 2144, and a physical interface card 2143. Functions and implementations of components in the interface board 2140 are the same as or similar to those of the interface board 2130, and details are not described herein again.

Optionally, the network device 2100 further includes a switching board 2120. The switching board 2120 may also be referred to as a switch fabric unit (switch fabric unit, SFU). When the network device 2100 has a plurality of interface boards, the switching board 2120 is configured to complete data exchange between the interface boards. For example, the interface board 2130 and the interface board 2140 may communicate with each other through the switching board 2120.

The main control board 2110 is coupled to the interface board. For example, the main control board 2110, the interface board 2130, the interface board 2140, and the switching board 2120 are connected to a system backboard through a system bus for interworking. In a possible implementation, an inter-process communication (inter-process communication, IPC) protocol channel is established between the main control board 2110, the interface board 2130, and the interface board 2140. The main control board 2110 communicates with the interface board 2130 and the interface board 2140 through the IPC channel.

Logically, the network device 2100 includes a control plane and a forwarding plane. The control plane includes the main control board 2110 and the central processing unit 2111. The forwarding plane includes components that perform forwarding, for example, the forwarding entry memory 2134, the physical interface card 2133, and the network processor 2132. The control plane performs functions such as a function of a router, generating a forwarding table, processing signaling and a protocol packet, and configuring and maintaining a state of the network device. The control plane delivers the generated forwarding table to the forwarding plane. On the forwarding plane, the network processor 2132 searches, based on the forwarding table delivered by the control plane, a table for forwarding the packet received by the physical interface card 2133. The forwarding table delivered by the control plane may be stored in the forwarding entry memory 2134. In some embodiments, the control plane and the forwarding plane may be completely separated, and are not on a same network device.

It should be noted that there may be one or more main control boards. When there are a plurality of main control boards, a primary main control board and a secondary main control board may be included. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need a switching board, and the interface board provides a function of processing service data of an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is greater than that of the network device in the centralized architecture. Optionally, a form of the network device may alternatively be a single board. To be specific, there is no switching board, and functions of the interface board and the main control board are integrated into the board. In this case, the central processing unit on the interface board and the central processing unit on the main control board may be combined into one central processing unit on the board, to perform functions obtained after the two central processing units are combined. The network device in this form (for example, a network device like a low-end switch or router) has a weak data exchange and processing capability. A specific architecture that is to be used depends on a specific networking deployment scenario. This is not limited herein.

In a specific embodiment, the network device 2100 corresponds to the packet forwarding and processing apparatus used in the main ONU shown in FIG. 11. In some embodiments, the transceiver module 1101 in the packet forwarding and processing apparatus shown in FIG. 11 is equivalent to the physical interface card 2133 in the network device 2100, and the processing module 1102 is equivalent to the central processing unit 2111 or the network processor 2132 in the network device 2100.

An embodiment of this application further provides a packet forwarding and processing system. The packet forwarding and processing system includes a main ONU, a sub ONU, and a firewall device. The main ONU is the network device 2000 shown in FIG. 12 or the network device 2100 shown in FIG. 13. The sub ONU is the network device 2000 shown in FIG. 12 or the network device 2100 shown in FIG. 13. The firewall device is the network device 2000 shown in FIG. 12 or the network device 2100 shown in FIG. 13. For the packet forwarding and processing method performed by the main ONU, the sub ONU, and the firewall device, refer to the related descriptions of the embodiment shown in FIG. 5. Details are not described herein again.

It should be understood that the processor may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computing machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information about a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example rather than limitative description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer-readable storage medium. The storage medium stores at least one instruction, and the instruction is loaded and executed by a processor, to cause a computer to implement any one of the foregoing packet forwarding and processing methods.

An embodiment of this application further provides a computer program (product). When the computer program is executed by a computer, a processor or the computer may be caused to perform corresponding steps and/or procedures in the foregoing method embodiments.

An embodiment of this application further provides a chip, including a processor. The processor is configured to invoke, from a memory, instructions stored in the memory and run the instructions, to cause a communication device on which the chip is installed to perform any one of the foregoing packet forwarding and processing methods.

An embodiment of this application further provides another chip, including an input interface, an output interface, a processor, and a memory. The input interface, the output interface, the processor, and the memory are connected to each other through an internal connection path. The processor is configured to execute code in the memory, and when the code is executed, the processor is configured to perform any one of the foregoing packet forwarding and processing methods.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive)), or the like.

A person of ordinary skill in the art may be aware that, with reference to the method steps and modules described in embodiments disclosed in this specification, the method steps and modules can be implemented by using software, hardware, firmware, or any combination thereof. To clearly describe interchangeability between the hardware and the software, the steps and compositions of embodiments have been generally described in terms of functions in the foregoing descriptions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

When software is used to implement the embodiments, all or some of the embodiments may be implemented in a form of a computer program product. The computer program product includes one or more computer program instructions. In an example, the method according to embodiments of this application may be described in the context of machine-executable instructions. For example, the machine-executable instructions are included in a program module that is in a component for execution on a real or virtual processor of a target. Generally, the program module includes a routine, a program, a library, an object, a class, a component, a data structure, and the like, and executes a specific task or implements a specific abstract data structure. In various embodiments, functions of the program modules may be combined or split between the described program modules. The machine-executable instructions for the program module may be executed locally or within a distributed device. In the distributed device, the program module may be located in both a local storage medium and a remote storage medium.

Computer program code used to implement the method in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

The machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It can be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiments are merely examples. For example, division into the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the devices or modules may be in electrical, mechanical, or other forms.

The modules described as separate parts may or may not be physically separate, and parts displayed as modules may or may not be physical modules, in other words, may be located at one position, or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in a form of a software functional module and sold or used as an independent product, the integrated module may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

Terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should also be understood that although the following descriptions use terms such as "first" and "second" to describe various elements, these elements should not be limited by the terms. These terms are merely used to distinguish one element from another. For example, without departing from the scope of various examples, a first image may be referred to as a second image, and similarly, the second image may be referred to as the first image. Both the first image and the second image may be images, and in some cases, may be separate and different images.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

In this application, the term "at least one" means one or more, and the term "a plurality of" in this application means two or more. For example, a plurality of second packets mean two or more second packets. The terms "system" and "network" are often used interchangeably in this specification.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise explicitly indicated in the context.

It should further be understood that the term "and/or" used in this specification indicates and includes any or all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should be further understood that the terms "if" may be interpreted as a meaning of "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A. B may alternatively be determined based on A and/or other information.

It should be further understood that "one embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments by using any appropriate manner.

The foregoing descriptions are merely optional embodiments of this application, but are not intended to limit this application. Any modification, equivalent replacement, improvement, or the like made within the principle of this application should fall within the protection scope of this application.

## Claims

1. A packet forwarding and processing method, wherein the method is applied to a main optical network unit ONU, and the method comprises:
receiving a first packet sent by a sub ONU;
when traffic is directly transmitted between the sub ONU and the firewall device, sending a second packet to the firewall device, wherein the second packet is obtained by adding a port tag and a first tunnel header to the first packet, the port tag indicates a port of the sub ONU, and the first tunnel header indicates the firewall device to send the second packet to the main ONU;
receiving the second packet on which audit processing or filtering processing has been performed by the firewall device, obtaining the first packet and the port tag based on the second packet, and obtaining, based on the port tag, a first processing policy configured for the port of the sub ONU, wherein the first processing policy comprises at least one of a service binding policy, a wide area network WAN binding policy, a local area network VLAN binding policy, a port filtering policy, a priority policy, or a sending interface policy; and
processing and forwarding the first packet according to the first processing policy.

2. The method according to claim 1, wherein the first packet carries information indicating the port of the sub ONU; and after the receiving the first packet sent by the sub ONU, the method further comprises:
when traffic is not directly transmitted between the sub ONU and the firewall device, obtaining, based on the information about the port of the sub ONU, the first processing policy configured for the port of the sub ONU, and processing the first packet according to the first processing policy, to obtain a processed third packet;
when a next hop of the third packet indicates an optical line terminal OLT, and traffic is directly transmitted between the OLT and the firewall device, sending the third packet to the firewall device; and
receiving the third packet on which audit processing or filtering processing has been performed by the firewall device, and sending the third packet to the OLT.

3. The method according to claim 1 or 2, wherein the method further comprises:
receiving a fourth packet sent by the optical line terminal OLT;
when traffic is directly transmitted between the OLT and the firewall device, sending the fourth packet to the firewall device; and
receiving the fourth packet on which audit processing or filtering processing has been performed by the firewall device, and forwarding the fourth packet in a manner of receiving the fourth packet sent by the OLT.

4. The method according to claim 3, wherein after the receiving the fourth packet sent by the optical line terminal OLT, the method further comprises:
when traffic is not directly transmitted between the OLT and the firewall device, determining, based on a destination address of the fourth packet, that a destination port of the fourth packet is the port of the sub ONU;
when a next hop of the fourth packet indicates the sub ONU and traffic is directly transmitted between the sub ONU and the firewall device, sending a fifth packet to the firewall device, wherein the fifth packet is obtained by adding the port tag and a second tunnel header to the fourth packet, and the second tunnel header indicates the firewall device to send the fifth packet to the main ONU; and
receiving the fifth packet on which audit processing or filtering processing has been performed by the firewall device, obtaining the fourth packet and the port tag based on the fifth packet, and sending the fourth packet to the sub ONU based on the port that is of the sub ONU and that is indicated by the port tag.

5. The method according to claim 4, wherein after the obtaining the first packet and the port tag based on the second packet, the method further comprises:
storing a correspondence between source address information of the first packet and the port that is of the sub ONU and that is indicated by the port tag, wherein the source address information comprises media access control MAC information and address resolution protocol ARP information; and
the determining, based on the destination address of the fourth packet, that the destination port of the fourth packet is the port of the sub ONU comprises:
determining, from the correspondence based on the destination address of the fourth packet indicating the MAC information and the ARP information, that the destination port of the fourth packet is the port of the sub ONU.

6. A packet forwarding and processing apparatus, wherein the method is applied to a main optical network unit ONU, and the apparatus comprises:
a transceiver module, configured to perform a receiving and/or sending-related operation in the method according to any one of claims 1 to 5; and
a processing module, configured to perform an operation other than the receiving and/or sending-related operation in the method according to any one of claims 1 to 5

7. A network device, wherein the network device comprises a processor, the processor is coupled to a memory, the memory stores at least one program instruction or code, and the at least one program instruction or the code is loaded and executed by the processor, to cause the network device to implement the packet forwarding and processing method according to any one of claims 1 to 5.

8. A packet forwarding and processing system, wherein the packet forwarding and processing system comprises a main optical network unit ONU, a sub ONU, and a firewall device; the sub ONU is configured to send a first packet to the main ONU; the main ONU is configured to perform the method according to any one of claims 1 to 5; the firewall device is configured to receive a second packet sent by the main ONU, wherein the second packet is obtained by adding a port tag and a first tunnel header to the first packet; and the firewall device is further configured to send, to the main ONU, the second packet on which audit processing or filtering processing has been performed by the firewall device.

9. A computer-readable storage medium, wherein the computer storage medium stores at least one instruction, and the at least one instruction is loaded and executed by a processor, to cause a computer to implement the packet forwarding and processing method according to any one of claims 1 to 5.

10. A computer program product, wherein the computer program product comprises computer program code, and the computer program code is loaded and executed by a computer, to cause the computer to implement the packet forwarding and processing method according to any one of claims 1 to 5.
